# EUROPÄISCHE PATENTSCHRIFT

(11) **EP 1 795 431 B1**
(45) Veröffentlichungstag und Bekanntmachung des Hinweises auf die Patenterteilung: **07.05.2008**
(21) Anmeldenummer: 06024264.1
(22) Anmeldetag: 23.11.2006
(51) Int. Cl.: B62D 5/04, B62D 7/02, B60K 7/00

(54) **Anordnung der Elektronikkomponenten bzw. Elektronikbaugruppen bei einen Handhubwagen, umfassend einen Lenkmotor, ein Lenkgetriebe und einen lenkbaren Antrieb**
Arrangement of electronic components resp. modules of a hand operated pallet truck, with a steering motor, a steering gear and a steerable drive unit
Arrangement des composants ou modules éléctroniques d'un transpalette manuel, avec un moteur de direction, un mécanisme de direction et une unité de propulsion dirigeable

(30) Priorität: 09.12.2005 DE 102005058941
(43) Veröffentlichungstag der Anmeldung: 13.06.2007
(73) Patentinhaber: ZF FRIEDRICHSHAFEN AG, 88038 Friedrichshafen (DE)
(72) Erfinder: Scharfenberg, Stephan, 99869 Tüttleben (DE); Stübner, Frank, 99894 Ernstroda (DE); Heinrich, Kai, 88285 Bodnegg (DE)

(56) Entgegenhaltungen:
- DE-A1- 19 911 458
- FR-A1- 2 821 024

## Beschreibung

Die vorliegende Erfindung betrifft eine Anordnung der Elektronikkomponenten bzw. Elektronikbaugruppen bei einem Handhubwagen, umfassend einen Lenkmotor, ein Lenkgetriebe und einen lenkbaren Antrieb, gemäß dem Oberbegriff des Patentanspruchs 1.

Handhubwagen sind zum Anheben, Transportieren und Absetzen von Lasten geeignet, die üblicherweise auf Paletten angeordnet sind. Sie umfassen eine Gabel mit zwei Zinken und sind im Kopfbereich mit einer mittels einer Deichsel schwenkbaren Antriebseinheit versehen.

Bei Handhubwagen bzw. Walkies sind nach dem Stand der Technik Hubwerk, Antrieb und Lenkung elektrisch ausgeführt, wobei die notwendigen Elektronikbaugruppen als separate Bauteile in der Nähe der Antriebe angebracht werden.

Aus der DE 103 28 651 A1 ist eine Antriebseinheit bekannt, mit einem Drehschemel, mindestens einem daran gelagerten Antriebsrad und einem oberhalb des Rades angeordneten Fahrmotor. Zwischen dem Fahrmotor und dem Rad ist ein Fahrgetriebe geschaltet, das eingangsseitig eine zur Drehachse D des Drehschemels koaxiale und als Fahrmotorwelle des Fahrmotors ausgebildete oder mit dieser drehstarr verbundene Antriebswelle aufweist. Die Antriebseinheit verfügt ferner über einen in Wirkverbindung mit dem Drehschemel stehenden Lenkmotor. Um die Antriebseinheit platzsparend, wartungsarm und fertigungs- und montagetechnisch einfach zu gestalten, ist gemäß der DE 103 28 651 A1 der Lenkmotor axial zwischen dem Fahrmotor und dem zum Fahrgetriebe benachbarten Ende der Antriebswelle angeordnet und weist eine zur Antriebswelle koaxiale Lenkmotorwelle auf, die hohl ausgebildet ist und durch die hindurch sich die Antriebswelle in das Fahrgetriebe hinein erstreckt.

Die DE 199 11 458 A1 offenbart eine Antriebseinheit für ein Flurförderzeug, wobei die Antriebseinheit einen Lenkmotor (2) mit einer Lenkmotorwelle (6) und einem Lenkmotorgehäuse (5) und ein Lenkgetriebe (3) und ein aus einem einen Fahrmotor, einem Fahrgetriebe und einer Bremse bestehenden lenkbaren Antrieb (1) aufweist, wobei der Lenkmotor (2), das Lenkgetriebe (3) und der lenkbare Antrieb (1) in der Reihenfolge lenkbarer Antrieb (1), Lenkgetriebe (3), Lenkmotor (2) vertikal übereinander angeordnet sind und die Lenkmotorwelle (6) als Hohlwelle (6) ausgebildet ist und die Antriebseinheit ein elektrisches Bauteil (8) aufweist, welches oberhalb des Lenkmotorgehäuses (5) angeordnet ist. Die als Hohlwelle ausgebildete Lenkmotorwelle ist zur Aufnahme eines als Sechskantstab ausgebildeten Drehgebers ausgestaltet, um die Schwenkposition des Antriebes zu ermitteln.

Der vorliegenden Erfindung liegt die Aufgabe zugrunde, eine Anordnung der Elektronikkomponenten bzw. Elektronikbaugruppen bei einem Handhubwagen, umfassend einen Lenkmotor, ein Lenkgetriebe und einen lenkbaren Antrieb, in den der Fahrmotor, das Fahrgetriebe und die Bremse integriert sind, anzugeben, welche in einer kompakten und bauraumsparenden Bauweise resultiert.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, alle antriebsrelevanten Elektronikbaugruppen in einem Elektronikgehäuse oberhalb des Lenkmotorgehäuses des Handhubwagens anzuordnen, wobei der Lenkmotor, das Lenkgetriebe und der lenkbare Antrieb in der Reihenfolge lenkbarer Antrieb, Lenkgetriebe, Lenkmotor vertikal übereinander angeordnet sind.

Das Fahrgetriebe kann gemäß der Erfindung als Planetengetriebe, Stirnradgetriebe, Kegelstirnradgetriebe oder auch als Schneckengetriebe ausgebildet sein.

Gemäß der Erfindung werden die antriebsrelevanten Elektronikbaugruppen oberhalb des Lenkmotorgehäuses angeordnet. Die Elektronikbaugruppen umfassen die Fahrmotorsteuerung und die Lenkmotorsteuerung, gegebenenfalls jeweils aufgeteilt nach Signal- und Leistungsteil, da ein gemeinsamer Signalteil ausreichend wäre, wobei jeder Motor einen separaten Leistungsteil benötigt.

Hierbei ist erfindungsgemäß vorgesehen, dass das Anschlusskabel des Fahrmotors und der Bremse durch die als Hohlwelle ausgebildete Motorwelle des Lenkmotors hindurchgeführt werden. Zu diesem Zweck werden an den Kabeln geeignete Schutzmaßnahmen umgesetzt; beispielsweise kann das Führungsrohr starr ausgeführt sein oder als Wellrohr ausgebildet sein.

In vorteilhafter Weise kann die Kontaktierung des Lenkmotors direkt erfolgen, da die entsprechenden Elektronikbauteile in unmittelbarer Nähe angeordnet sind.

Im Rahmen einer vorteilhaften Weiterbildung kann auch die Elektronik für Steer-by-Wire-Varianten (hierbei erfolgt die Lenkwinkelvorgabe durch Messwertaufnehmer an der Deichsel) oder für Varianten mit Servo-Lenkungen mit direkter Deichselverbindung gemäß der Erfindung integriert werden.

Besonders vorteilhaft ist es, wenn das B-Lagerschild des Lenkmotors als Teil des Elektronikgehäuses ausgebildet ist. Im Rahmen einer vorteilhaften Weiterbildung ist vorgesehen, dass das Elektronikgehäuse, was aus Kunststoff hergestellt sein kann, das B-Lager des Motors aufnimmt, wodurch das B-Lagerschild entfällt.

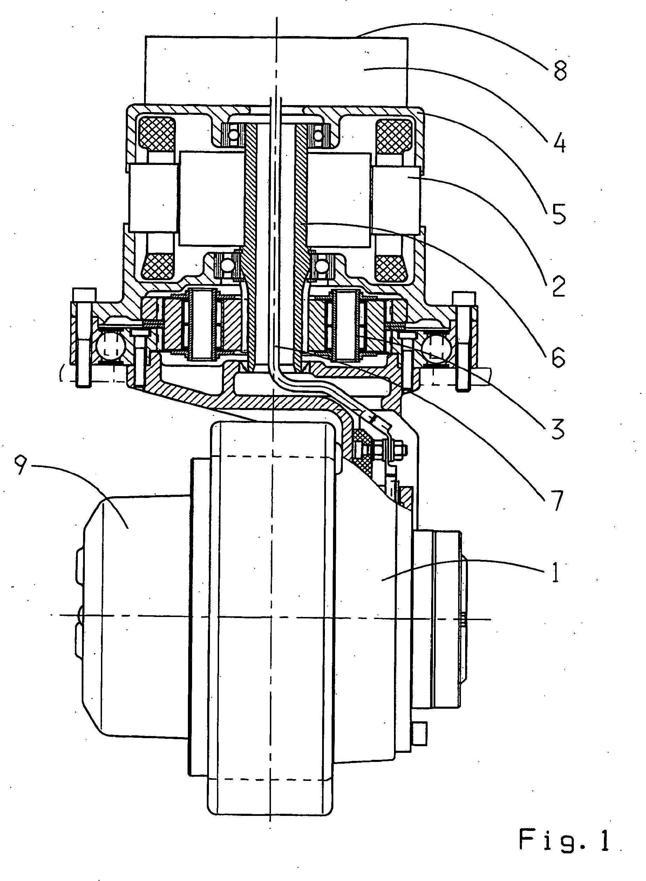

Die Erfindung wird im Folgenden anhand der beigefügten Figur, welche eine schematische Schnittansicht einer bevorzugten Ausführungsform der Erfindung darstellt, beispielhaft näher erläutert.

Gemäß der Figur umfasst der Handhubwagen einen lenkbaren Antrieb 1, in den der Fahrmotor, das Fahrgetriebe 9 und die Bremse integriert sind. Des weiteren ist ein Lenkmotor 2 vorgesehen, welcher über ein Lenkgetriebe 3 die Lenkbewegung überträgt, wobei das Lenkgetriebe 3 zwischen dem lenkbaren Antrieb 1 und dem Lenkmotor 2 angeordnet ist. Der Lenkmotor 2 und das Lenkgetriebe 3 sind im Wesentlichen oberhalb des lenkbaren Antriebs 1 (d.h. vertikal) angeordnet, so dass sich die Reihenfolge lenkbarer Antrieb 1, Lenkgetriebe 3, Lenkmotor 2 ergibt. Bei dem gezeigten Beispiel ist das Fahrgetriebe 9 als Planetengetriebe ausgeführt, was in vorteilhafter Weise in einer kompakten Bauweise resultiert.

Gemäß der Erfindung ist vorgesehen, dass die antriebsrelevanten Elektronikbaugruppen 4 in einem Gehäuse 8 (Elektronikgehäuse) oberhalb des Lenkmotorgehäuses 5 angeordnet sind. Die Elektronikbaugruppen 4 umfassen die Fahrmotorsteuerung und die Lenkmotorsteuerung, gegebenenfalls jeweils aufgeteilt nach Signal- und Leistungsteil, da ein gemeinsamer Signalteil ausreichend wäre, wobei jeder Fahrmotor und Lenkmotor jeweils einen separaten Leistungsteil benötigen.

Wie aus der Figur ersichtlich, werden die Anschlusskabel des Fahrmotors und der Bremse mittels einer Kabeldurchführung 7 durch die als Hohlwelle 6 ausgebildete Lenkmotorwelle des Lenkmotors 2 hindurchgeführt. Hierbei kann die Kabeldurchführung 7 starr ausgeführt oder als Wellrohr oder als Schutzschlauch ausgebildet sein.

Durch die erfindungsgemäße Konzeption wird eine kompakte und bauraumsparende Bauweise erzielt. Des weiteren wird durch die Anordnung der Elektronikkomponenten bzw. Elektronikbaugruppen eine Vereinfachung der Montage sowie der Wartung erzielt.

Selbstverständlich fällt auch jede konstruktive Ausbildung, insbesondere jede räumliche Anordnung einzelner Komponenten an sich sowie zueinander und soweit technisch sinnvoll, unter den Schutzumfang der vorliegenden Ansprüche, ohne die Funktion des Handhubwagens, wie sie in den Ansprüchen angegeben ist, zu beeinflussen, auch wenn diese Ausbildungen nicht explizit in der Figur oder in der Beschreibung dargestellt sind.

### Bezugszeichen

- 1: lenkbarer Antrieb
- 2: Lenkmotor
- 3: Lenkgetriebe
- 4: Elektronikbaugruppen
- 5: Lenkmotorgehäuse
- 6: Hohlwelle
- 7: Kabeldurchführung
- 8: Elektronikgehäuse
- 9: Fahrgetriebe

## Patentansprüche

1. Antriebseinheit für einen Handhubwagen wobei die Antriebseinheit einen Lenkmotor (2) mit einer Lenkmotorwelle (6) und einem Lenkmotorgehäuse (5) und ein Lenkgetriebe (3) und ein aus einem Fahrmotor, einem Fahrgetriebe und einer Bremse bestehenden lenkbaren Antrieb (1) aufweist, wobei der Lenkmotor (2), das Lenkgetriebe (3) und der lenkbare Antrieb (1) in der Reihenfolge lenkbarer Antrieb (1), Lenkgetriebe (3), Lenkmotor (2) vertikal übereinander angeordnet sind, wobei die Lenkmotorwelle (6) als Hohlwelle (6) ausgebildet ist und die Antriebseinheit ein elektrisches Bauteil (8) aufweist, welches oberhalb des Lenkmotorgehäuses (5) angeordnet ist, **dadurch gekennzeichnet, dass** der Fahrmotor und die Bremse Anschlusskabel aufweisen, welche durch die Lenkmotorwelle (6) zum elektrischen Bauteil (8) hindurchgeführt sind, wobei das elektrische Bauteil (8) in einem Elektronikgehäuse (8) mit allen antriebsrelevanten Elektronikkomponenten bzw. Elektronikbaugruppen angeordnet ist.

2. Antriebseinheit nach Anspruch 1, **dadurch gekennzeichnet, dass** die Anschlusskabel mittels einer Kabeldurchführung (7) durch die Hohlwelle hindurchgeführt sind.

3. Antriebseinheit nach Anspruch 2, **dadurch gekennzeichnet, dass** die Kabeldurchführung (7) starr ausgeführt oder als Wellrohr oder als Schlutzschlauch ausgebildet ist.

4. Antriebseinheit nach Anspruch 1, 2 oder 3, **dadurch gekennzeichnet, dass** die Kontaktierung des Lenkmotors (2) direkt erfolgt, da die entsprechenden Elektronikbauteile in unmittelbarer Nähe des Lenkmotors (2) angeordnet sind.

5. Antriebseinheit nach einem der vorangehenden Ansprüche, **dadurch gekennzeichnet, dass** das B-Lagerschild des Lenkmotors (2) als Teil des Elektronikgehäuses (8) ausgebildet ist.

6. Antriebseinheit nach einem der vorangehenden Ansprüche 1 bis 4, **dadurch gekennzeichnet, dass** das Elektronikgehäuse (8) das B-Lager des Lenkmotors (2) aufnimmt, wodurch das B-Lagerschild entfällt.

7. Antriebseinheit nach einem der vorangehenden Ansprüche, **dadurch gekennzeichnet, dass** das Elektronikgehäuse (8) aus Kunststoff hergestellt ist.

## Claims

1. Drive unit for a manual lift truck, with the drive unit featuring a steering motor (2) with a steering-motor shaft (6) and a steering-motor housing (5), and a steering gear (3), and a steerable drive (1) consisting of a drive motor, a drive gear and a brake, with the steering motor (2), the steering gear (3) and the steerable drive (1) being arranged vertically above each other in the sequence steerable drive (1), steering gear (3), steering motor (2), with the steering-motor shaft (6) being designed as a hollow shaft (6) and the drive unit featuring an electric component (8) arranged above the steering-motor housing (5), **characterized in that** the drive motor and the brake are provided with connecting cables which are routed through the steering-motor shaft (6) to the electric component (8), with the electric component (8) being arranged in an electronic housing (8) together with all drive-relevant electronic components or electronic assemblies.

2. Drive unit am to claim 1, **characterized in that** the connecting cables are routed through the hollow shaft by means of a cable duct (7).

3. Drive unit acc. to claim 2, **characterized in that** the cable duct (7) is designed as a rigid duct, or as a corrugated tube, or as a protective sleeve.

4. Drive unit acc. to claim 1, 2 or 3, **characterized in that** contact with the steering motor (2) is established in a direct manner as the relevant electronic components are arranged in the immediate vicinity of the steering motor (2).

5. Drive unit acc. to one of the preceding claims, **characterized in that** the B support plate of the steering motor (2) constitutes part of the electronics housing (8).

6. Drive unit acc. to one of the preceding claims 1 thru 4, **characterized in that** the electronics housing (8) accommodates the B support of the steering motor (2), as a result of which the B support plate is omitted.

7. Drive unit acc. to one of the preceding claims, **characterized in that** the electronics housing (8) is made of plastic.

## Revendications

1. Unité d'entraînement dun chariot de levage à main, sachant que l'unité d'entraînement est dotée dun moteur de direction (2) comprenant un arbre de moteur de direction (6) et un carter de moteur de direction (5) et un boîtier de direction (3) et un mécanisme d'entraînement orientable (1) composé d'un moteur d'automobile, d'une boîte de vitesses et d'un frein, sachant que le moteur de direction (2), le boîtier de direction (3) et le mécanisme d'entraînement orientable (1) sont disposés dans l'ordre mécanisme d'entraînement orientable (1), boîtier de direction (3) et moteur de direction (2) verticalement l'un au-dessus de l'autre, sachant que l'arbre du moteur de direction (6) est réalisé comme arbre creux (6) et l'unité d'entraînement comporte un élément électrique (8), celui-ci étant disposé au-dessus du carter du moteur de direction (5), **caractérisée en ce que** le moteur d'automobile et le frein comportent des câbles de connexion qui traversent l'arbre du moteur de direction (6) pour arriver jusqu'à l'élément électrique (8), sachant que l'élément électrique (8) est disposé dans un boîtier électronique (8) comportant tous les composants électroniques ou ensembles électroniques pertinents pour l'entraînement

2. Unité d'entraînement selon la revendication 1, **caractérisée en ce que** les câbles de connexion sont acheminés à l'aide d'un passe-câbles (7) à travers l'arbre creux.

3. Unité d'entraînement selon la revendication 2, **caractérisée en ce que** le passe-câbles (7) est réalisé de façon rigide ou comme tube ondulé ou comme gaine de câbles.

4. Unité d'entraînement selon la revendication 1, 2 ou 3, **caractérisée en ce que** l'établissement des contacts du moteur de direction (2) est effectué directement, les éléments électroniques correspondants étant disposés à proximité immédiate du moteur de direction (2).

5. Unité d'entraînement selon une des revendication précédentes, **caractérisée en ce que** le flasque de palier du moteur de direction (2) est réalisé en tant que partie du boîtier électronique (8).

6. Unité d'entraînement selon une des revendication précédentes 1 à 4, **caractérisée en ce que** dans le boîtier électronique (8) est logé le roulement B du moteur de direction (2), ce qui fait que le flasque de palier B est obsolète.

7. Unité d'entraînement selon une des revendication précédentes, **caractérisée en ce que** dans le boîtier électronique (8) est réalisé en matière plastique.
